# EUROPEAN PATENT APPLICATION

(11) **EP 4 488 881 A1**
(43) Date of publication of application: **08.01.2025**
(21) Application number: 24183701.2
(22) Date of filing: 21.06.2024
(51) Int. Cl.: G06N 3/045, G06N 3/063

(54) **INCREMENTAL SOLVES USING LLMS FOR API CALLS**

(30) Priority: 23.06.2023 US 202363509932 P; 26.09.2023 US 202318475058
(71) Applicant: CrowdStrike, Inc., Sunnyvale, CA 94086 (US)
(72) Inventor: CORLATESCU, Dragos, Sunnyvale, 94086 (US); BELIBOV, Dan, Sunnyvale, 94086 (US); RADU, Daniel, Sunnyvale, 94086 (US); CHIHAIA, Theo, Sunnyvale, 94086 (US); RADU, Marian, Sunnyvale, 94086 (US)
(74) Representative: Murgitroyd & Company

(57) **Abstract**

Systems and methods for incremental solves using LLMs for API calls is presented. The systems and methods produce, by a first large learning model (LLM), a processing plan based on a first prompt, wherein the processing plan includes a plurality of tasks corresponding to a plurality of services. The systems and methods send a plurality of messages corresponding to the plurality of tasks to a plurality of service agents, wherein the plurality of service agents correspond to the plurality of services and comprise a plurality of second LLMs that produce a plurality of agent responses. The systems and methods then generate a query response based on the plurality of agent responses.

## Description

### CROSS-REFERENCE TO RELATED APPLICATIONS

This application claims priority from and the benefit of United States Provisional Patent Application No. 63/509,932 filed June 23, 2023, the entire contents of which are incorporated herein by reference.

### TECHNICAL FIELD

Aspects of the present disclosure relate to large language models (LLMs), and more particularly, to incremental solves using LLMs for Application Programming Interface (API) calls.

### BACKGROUND

Large language models are designed to understand and generate coherent and contextually relevant text. A large language model typically receives input text in the form of a system prompt. The system prompt may include various components such as a question and contextual information to assist the large language model in answering the question. The large language model then converts the system prompt into tokens. A token refers to a unit or element into which a piece of text is divided during a tokenization process. Tokens may represent various elements of the text, such as individual words, sub words, or characters. Each token is typically assigned a unique numerical identifier (ID) that corresponds to its representation in the large language model's vocabulary.

The large language model uses the tokens as input to generate an output through token-based language modeling. During inference or generation, the large language model employs a decoding process where the large language model produces coherent and contextually appropriate responses.

### SUMMARY

Accordingly there is provided a method, a system, and a computer program as detailed in the claims that follow.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
Figure 1 is a block diagram that illustrates an example system that processes queries in a multi-service big platform system, in accordance with some embodiments of the present disclosure.
Figure 2A is a is a block diagram that illustrates an example system of a service agent receiving a message from the orchestrator agent and sending a response to the orchestrator agent that includes API calls, in accordance with some embodiments of the present disclosure.
Figure 2B is a is a block diagram that illustrates an example system of a service agent receiving a message from the orchestrator agent, sending API calls to a service, and sending a response to the orchestrator agent that includes service responses received from the service, in accordance with some embodiments of the present disclosure.
Figure 3 is a flow diagram of a method for constructing a processing plan and executing the processing plan in a multi-service big platform system, in accordance with some embodiments of the present disclosure.
Figure 4 is a flow diagram of a method for processing a user query in a multi-service big platform system, in accordance with some embodiments of the present disclosure.
Figure 5 is a is a block diagram that illustrates an example system for processing a user query in a multi-service big platform system, in accordance with some embodiments of the present disclosure.
Figure 6 illustrates a diagrammatic representation of a machine in the example form of a computer system within which a set of instructions, for causing the machine to perform any one or more of the methodologies discussed herein for processing a query.

### DETAILED DESCRIPTION

As discussed above, a large language model (LLM) typically receives input text in the form of a system prompt that may include various components such as a question and contextual information to assist the large language model in answering the question. The system prompt may be generated from document groups using various techniques, such as data collection, preprocessing, segmentation, prompt generation, formatting, and validation. Data collection refers to collecting a diverse set of document groups that cover a wide range of topics or specific domains based on the intended application. Preprocessing refers to preprocessing the collected documents to remove irrelevant information or noise, which may involve removing headers, footers, citations, or other content that is not relevant to the prompt generation process. Segmentation refers to segmenting the documents into smaller units, such as paragraphs or sentences, to facilitate the generation of system prompts. Prompt generation refers to generating prompts by selecting a representative subset of segments. Formatting refers to formatting the selected segments into appropriate prompts, which may involve adding additional context or instructions to guide the LLM's response. Validation refers to reviewing and validating the prompts to ensure their quality and coherence.

When an LLM is integrated into a multi-service big platform system, the LLM may have difficulty in possessing comprehensive domain expertise and specific knowledge related to each of the various services. While the LLM can generate generic responses, the LLM may lack detailed understanding of the intricacies and nuances of the different services, which results in inaccurate or incomplete information being provided to users. Along these lines, different services often have their own jargon, terminologies, and context-specific requirements. The LLM may face difficulties in correctly interpreting and generating content that aligns with the specific language and context of each service, thereby leading to confusion or miscommunication when integrating the LLM into the multi-service big platform system.

To assist the LLM in multi-service big platform systems to produce accurate answers, additional context may be included in the system prompt such as general text documentation and detail text documentation. The detail text documentation may include, for example, API endpoint documentation when the LLM is requested to output or execute an API call. API endpoints correspond to URLs (Uniform Resource Locators) through which clients can access and interact with individual services. API endpoint documentation refers to a comprehensive set of instructions, guidelines, and details that describe the various endpoints exposed by the corresponding API. API endpoint documentation typically includes the available endpoints, their methods (e.g., GET, POST, PUT, DELETE), required parameters, possible response formats (e.g., JSON, XML), and authentication or authorization requirements.

API endpoint documentation, however, may be lengthy due to the included amount of detail. A challenge found with using lengthy documentation with an LLM is that when the lengthy documentation is converted into tokens, the amount of tokens from the conversion exceeds a maximum amount of tokens that the LLM can support, referred to as a "maximum token limit" or a "maximum input length." When the LLM encounters input text (including the question and support documentation) that converts to tokens exceeding the LLM's maximum token limit, the LLM may truncate or omit tokens (e.g., representing text). As such, the LLM may lose context or fail to understand the complete meaning of the input, which can lead to inaccurate or incomplete responses. In addition, because the LLM relies on the context provided by the surrounding tokens to generate meaningful responses, when tokens are truncated, the context window shrinks, potentially affecting the LLM's ability to capture the full context, which may result in less accurate or less coherent outputs.

Furthermore, a challenge with using an LLM in a multi-service big platform system is comprehensively handling the intricate nature of user queries, which is notably amplified within such an environment. Coordinating the LLM's interactions with various services requires intricate orchestration, as the LLM attempts to navigate through diverse data sources, services, and APIs to formulate a coherent response. Ensuring data consistency and accuracy across the disparate services adds another layer of complexity, necessitating synchronization and error handling mechanisms.

The present disclosure addresses the above-noted and other deficiencies by providing an approach of using an "orchestrator" agent to interact with a user interface. The orchestrator agent uses an LLM to formulate a processing plan to solve user queries, and coordinates with other agents (service agents) to execute the plan. The service agents are equipped with an LLM that manages their respective endpoints and provides information as needed. The orchestrator agent also maintains a record of the tasks taken during the execution of the processing plan, allowing for plan adjustments and adaptations based on responses from the service agents.

In some embodiments, a first LLM receives a first prompt and produces a processing plan. The processing plan includes tasks corresponding to multiple services in a multi-service big platform system. The approach sends messages corresponding to the tasks to service agents corresponding to the multiple services. The service agents use second LLMs to produce agent responses based on the messages. The approach then generates a query response based on the agent responses.

In some embodiments, the agent responses include Application Programming Interface (API) calls. The approach organizes the API calls into an execution stack, and executes the API calls to the services in an order based on the execution stack. In some embodiments, the second LLMs executing on the service agents execute the API calls to their corresponding services to produce an API responses. The approach receives the API responses from the service agents, and generates the query response based on the API responses.

In some embodiments, the approach identifies a first task in the processing plan, and identifies a first service agent corresponding to the first task. The first LLM generates a first message based on a service description of the first service agent and sends the first message to the first service agent. The approach receives a first agent response from the first service agent and determines that the first agent response completes the first task. In turn, the approach marks the first task as complete in the processing plan and processes a second task in the processing plan. In some embodiments, in response to determining that the first agent response does not complete the first task, the approach constructs a second prompt based on a user query and the first agent response. The approach inputs the second prompt into the first LLM and the first LLM produces a new processing plan that includes new tasks. The approach then sends new messages to the service agents based on the new tasks.

In some embodiments, the approach creates the first prompt based on the user query and a first document group that includes information corresponding to each of the service agents. The approach inputs the first prompt into the first LLM to produce the processing plan. The approach then creates a second prompt based on the first document group and the first task. Responsive to inputting the second prompt into the first LLM, the first LLM generates the first message.

In some embodiments, the first service agent creates a prompt based on the first message and a second document group. The second document group includes more detailed information of the first service agent relative to the information included in the first document group. The first service agent inputs the prompt into its corresponding second LLM to produce the first agent response.

As discussed herein, the present disclosure provides an approach that improves the operation of a computer system by using LLMs to increase the speed at which user queries are processed, using a reduced amount of resources, in a multi-service big platform system. In addition, the present disclosure provides an improvement to the technological field of multi-service big platform systems by comprehensively handling the intricate and complex nature of user queries and providing accurate query responses.

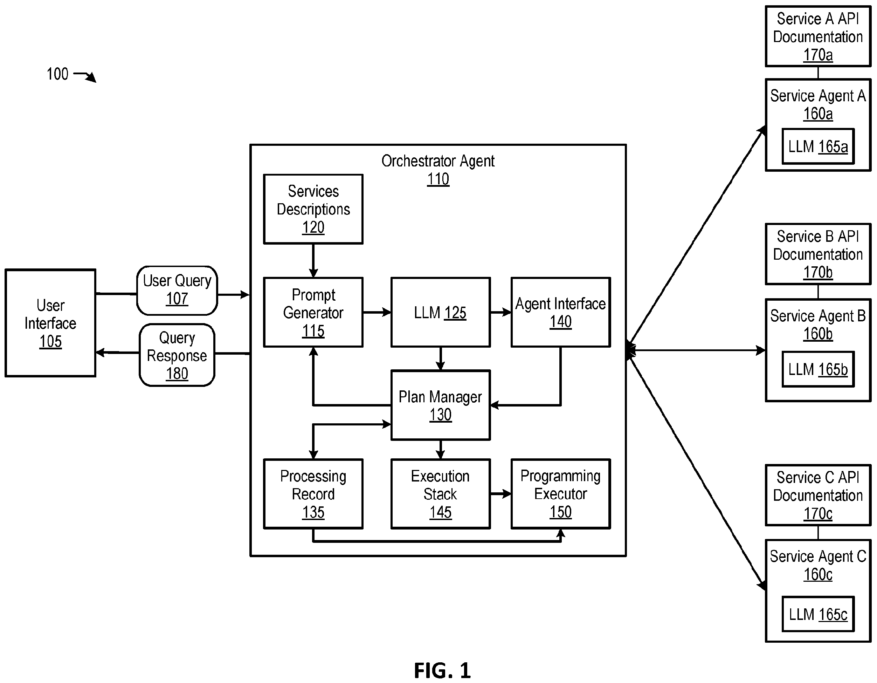

Figure 1 is a block diagram that illustrates an example system that processes queries in a multi-service big platform system, in accordance with some embodiments of the present disclosure. System 100 easily scales for data size and can accommodate evolving plans.

System 100 includes orchestrator agent 110 and service agents A 160a, B 160b, and C 160c (collectively referred to herein as service agents 160). Each of service agents 160 correspond to a service in a multi-service big platform system. Orchestrator agent 110 receives user query 107 from user interface 105, and prompt generator 115 uses user query 107 and services descriptions 120 to generate a prompt. Service descriptions 120 include high level information for each service in the multi-service environment. Service descriptions provide a high-level overview of the various services available within the platform, and typically include information about the purpose, capabilities, and functionality of each service.

Prompt generator 115 feeds the prompt into LLM 125 and LLM 125 produces a processing plan. The processing plan includes an ordered set of tasks to fulfill user query 107, such as "1. Collect information from service A; 2. Use the collected information from service A to collect information from service B; etc." LLM 125 passes the processing plan to plan manager 130, and plan manager 130 stores the processing plan in processing record 135.

Next, plan manager 130 retrieves the first task from the processing plan and sends the first task to prompt generator 115. Prompt generator 115 uses the first task and services descriptions 120 to create a prompt that requests LLM 125 to create a message to send to the first task's corresponding service agent. Prompt generator 115 sends the prompt to LLM 125, and LLM 125 creates the message for the corresponding one of service agents 160.

LLM 125 passes the message to agent interface 140, and agent interface 140 sends the message to the corresponding one of service agents 160. Each of service agents 160 use service API documentation 170 (170a, 170b, 170c) to construct prompts for their corresponding LLM 165 (165a, 165b, 165c). Service API documentation 170 includes details about the inner workings of an API endpoint and may include technical specifications, data models, error codes, rate limits, security considerations, and other intricacies related to the API endpoint's implementation. Service agent 160 inputs the prompt into its LLM 165, and LLM 165 produces an agent response. In some embodiments, the agent response includes API calls to its corresponding service (e.g., Service A, Service B, Service C).

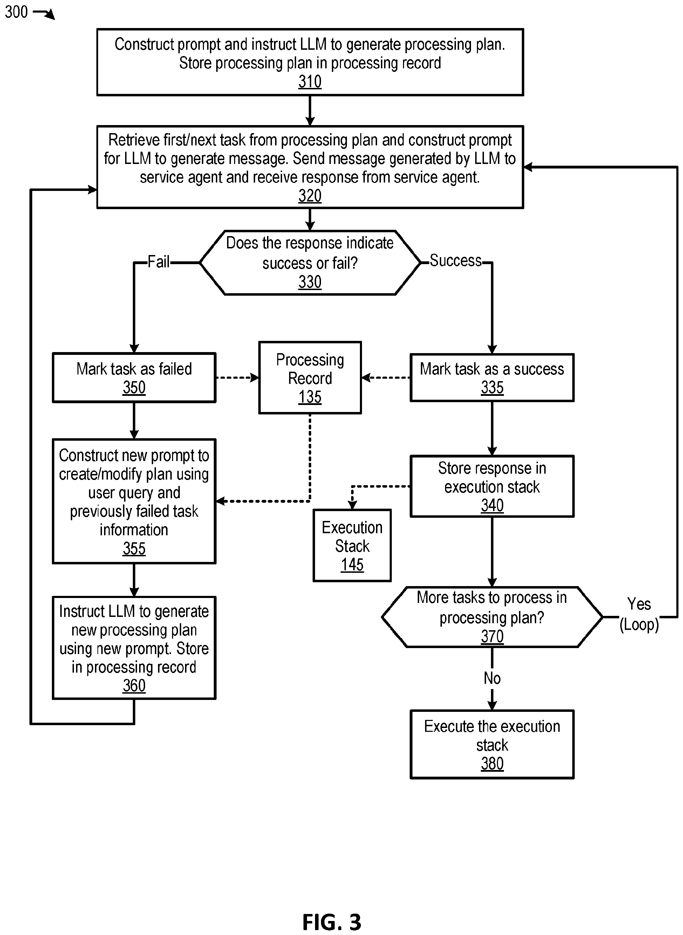

Service agent 160 sends the agent response back to orchestrator agent 110, and agent interface 140 forwards the response to plan manager 130. Plan manager 130 evaluates the agent response and determines whether the agent response is a successful response to the message or a failed response to the message (see Figure 3 and corresponding text for further details). When the response is successful, plan manager 130 stores the API calls in the agent response in execution stack 145 and marks the corresponding task in processing record 135 as successful. In addition, in some embodiments, for future execution, plan manager 130 stores a pointer in processing record 135 that points the successful task to the API calls in execution stack 145.

In some embodiments, orchestrator agent 110 provides knowledge to a subsequent service agent 160 obtained from a previous service agent 160. In some embodiments, orchestrator agent 110 uses a placeholder for information from a previous agent response; sends messages to subsequent service agents 160 using the placeholder; and the subsequent service agents 160 provide agent responses that include the placeholder (e.g., API calls). Then, orchestrator agent 110 (e.g., program executor 150) replaces the placeholder with valid information during execution. For example, user query 107 may state "Give me detections attributed to actor XYZ." In a correct chain of operations, a first service agent 160 may respond with "I have the id of actor XYZ." Next, when orchestrator agent 110 sends a message to a second service agent 160, the second service agent 160 is informed that the information of the id of XYZ is available for use. In this example, orchestrator agent 110 may send a message to the second service agent 160 of: "Give the detections attributed to the actor with id <step1.actor_id_of_XYZ>. The <step1.actor_id_of_XYZ> is a placeholder that will be replaced in the execution stage, but for now build your API calls parameters using this placeholder."

In some embodiments, if the structure of the first service agent 160's response is complex, orchestrator agent 110 may explain the schema of the objects in the message to the second service agent 160. For example, orchestrator agent 110 may send a message to the second service agent 160 of: "Give the detections attributed to the actor <step1.actor_object>. The <step1.actor_object> is a placeholder that will be replaced in the execution stage, but for now build your API calls parameters using this placeholder. The <step1.actor_object> contains the following fields: id, name, targeted_countries, etc. You can access a field from the object by writing <step1.actor_object>.id, example of getting the id."

Plan manager 130 retrieves the next task from processing record 135 and the process repeats as discussed above until each task in processing record 135 completes. At this point, execution stack 145 includes a stack of API calls to fulfill user query 107. Programming executor 150 then uses processing record 135 and execution stack 145 to execute the API calls in execution stack 145 on the corresponding services. Programming executor 150 receives the service responses from the various services and constructs query response 180 from the service responses. In turn, orchestrator agent 110 provides query response 180 to user interface 105.

In some embodiments, when plan manager 130 detects that one of the agent responses received from service agents 160 is a failed response, plan manager 130 marks the corresponding task as "failed" in processing record 135 and marks the processing plan as "failed" in processing record 135. Prompt generator 115 then generates a new prompt using user query 107, services descriptions 120, and information from the failed processing plan. Based on the new prompt, LLM 125 generates a new processing plan or determines that a response to user query 107 is unable to be produced. In some embodiments, when the new processing plan includes tasks that have been successfully fulfilled in previous plans, orchestrator agent 110 uses the corresponding API calls obtained from the previous processing plans instead of sending new messages to the corresponding service agent 160.

In some embodiments, each processing plan is stored in processing record 135 and has a field marking each plan as a "failed plan" or as a "successful plan". In addition, each task from the processing plan is marked as an "unexecuted step," "failed step," or "successful step." In some embodiments, each task has an executor stack field that points to an entry in execution stack 145, where API endpoint calls are stored for that task when the task is a successful task. In turn, when the processing plan is completes successfully, the processing plan is marked as a "successful plan" and programming executor 150 proceeds through each task from the successful plan and executes the corresponding API calls for the corresponding executor stack.

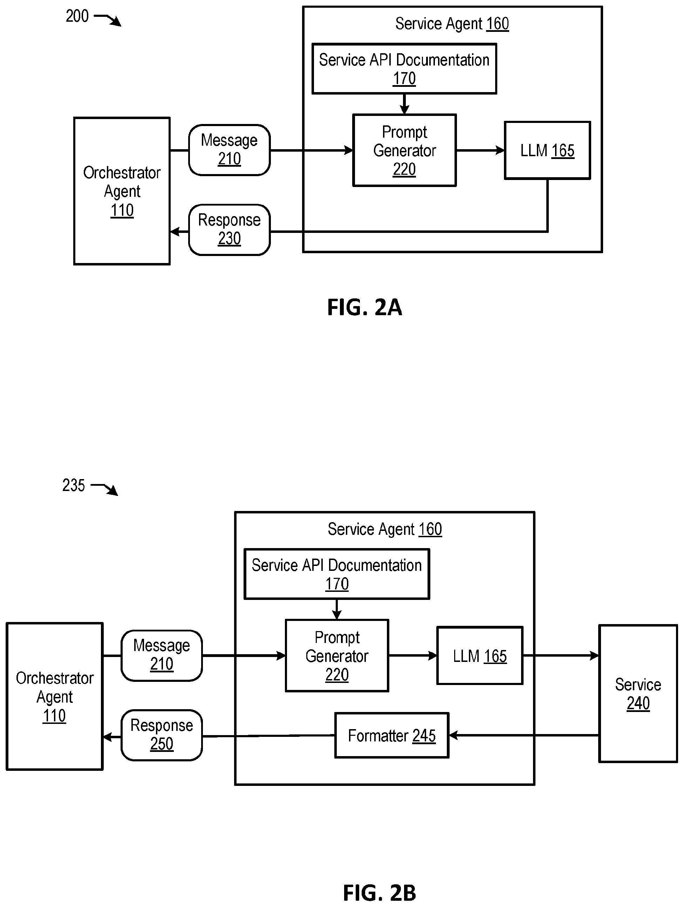

Figure 2A is a is a block diagram that illustrates an example system of a service agent receiving a message from the orchestrator agent and sending a response to the orchestrator agent that includes API calls, in accordance with some embodiments of the present disclosure.

System 200 shows orchestrator agent 110 sending message 210 to service agent 160. Service agent 160 includes prompt generator 220. Prompt generator 220 use message 210 and service API documentation 170 to generate a prompt. As discussed above, service API documentation 170 includes detailed information to generate API calls for a corresponding service in a multi-service big platform system. Prompt generator 115 feeds the prompt into LLM 165, and LLM 165 produces response 230. Response 230, in some embodiments, includes one or more API calls. Service agent 160 sends response 230 to orchestrator agent 110 and orchestrator agent 110 processes response 230 as discussed herein.

Figure 2B is a is a block diagram that illustrates an example system of a service agent receiving a message from the orchestrator agent, sending API calls to a service, and sending a response to the orchestrator agent that includes service responses received from the service, in accordance with some embodiments of the present disclosure. System 235 shown in Figure 2B is different from system 200 shown in Figure 2A because, instead of sending the API calls back to orchestrator agent, service agent 160 executes the API calls on service 240 to receive service responses.

Prompt generator 115 generates a prompt using message 210 and service API documentation 170 as discussed earlier in Figure 2A. When LLM 165 produces the API calls in response to receiving the prompt, service agent 160 executes the API calls on service 240. Service 240 then provides service response to service agent 160. In some embodiments, service agent 160 includes formatter 245 to format the service response. In turn, service agent 160 provides response 250 to orchestrator agent 110 that includes the service response, which alleviates orchestrator agent 110 from executing the API calls.

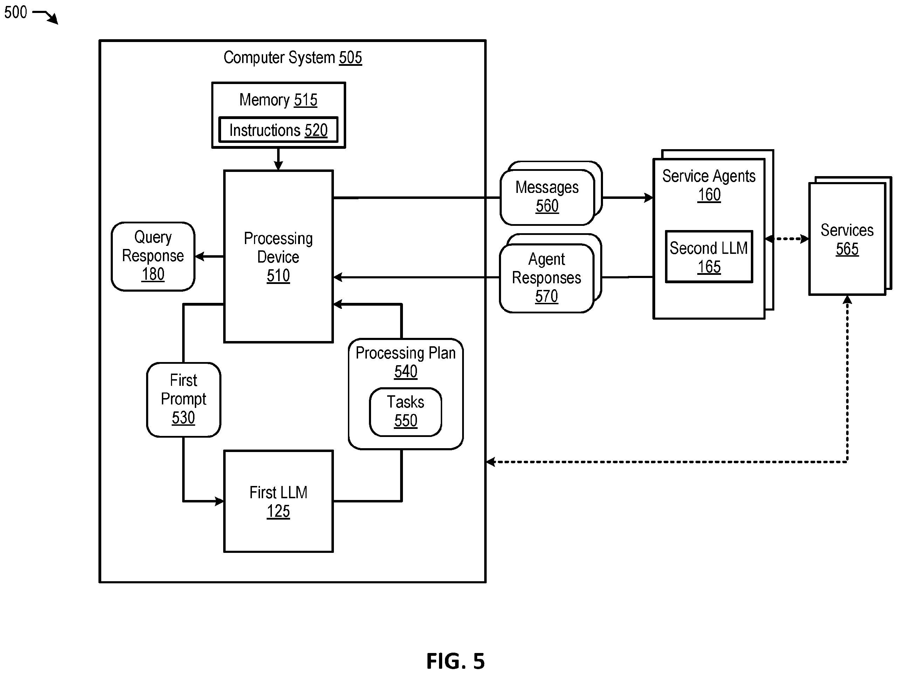

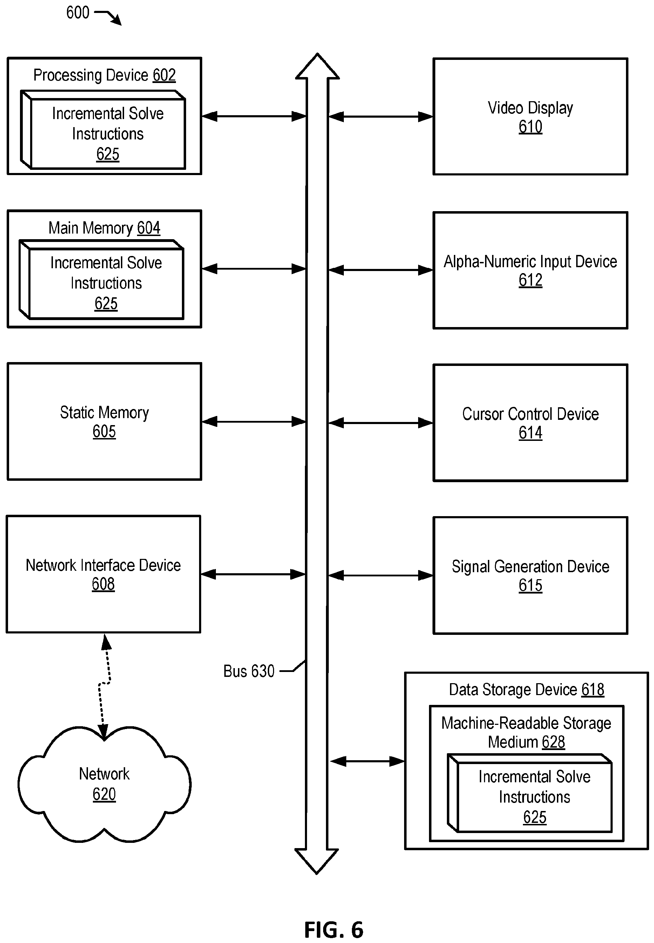

Figure 3 is a flow diagram of a method for constructing a processing plan and executing the processing plan in a multi-service big platform system, in accordance with some embodiments of the present disclosure. Method 300 may be performed by processing logic that may include hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, at least a portion of method 300 may be performed by orchestrator agent 110, processing device 510 shown in Figure 5, processing device 602 shown in Figure 6, or a combination thereof.

With reference to Figure 3, method 300 illustrates example functions used by various embodiments. Although specific function blocks ("blocks") are disclosed in method 300, such blocks are examples. That is, embodiments are well suited to performing various other blocks or variations of the blocks recited in method 300. It is appreciated that the blocks in method 300 may be performed in an order different than presented, and that not all of the blocks in method 300 may be performed.

With reference to Figure 3, method 300 begins at block 310, wherein processing logic constructs a prompt and instructs LLM 125 to generate a processing plan. The processing plan includes tasks that correspond to multiple services in a multi-service big platform system as discussed herein. Processing logic stores the processing plan in processing record 135.

At block 320, processing logic retrieves the first task from the processing plan and constructs a second prompt, which processing logic inputs into LLM 125. LLM 125 generates a message and processing logic sends the message to a corresponding service agent 160. Processing logic then receives a response from the service agent.

At block 330, processing logic determines whether the response from the service agent is a success or a failure. If the response is successful, block 330 branches to block 335, whereupon processing logic marks the task as a success in processing record 135. At block 340, processing logic stores the response (e.g., API calls) in execution stack 145. At block 370, processing logic determines if there are more tasks to process in the processing plan. If there are more tasks in the processing plan to process, processing logic branches back to block 320, whereupon processing logic retrieves the next task from the processing plan, constructs and inputs a prompt into LLM 125, and sends the next message generated by LLM 125 to the next service agent.

In some embodiments, as discussed above, orchestrator agent 110 provides knowledge to a subsequent service agent 160 obtained from a previous service agent 160. In some embodiments, orchestrator agent 110 uses a placeholder for information from a previous agent response; sends messages to subsequent service agents 160 using the placeholder; and the subsequent service agents 160 provide agent responses that include the placeholder (e.g., API calls).

Referring back to block 330, if processing logic determines that the response received from service agent 160 is a failure, processing logic branches to block 350, whereupon processing logic marks the task as "failed" in processing record 135. At block 355, processing logic constructs a new prompt to create or modify the processing plan using the original user query and previously failed task information stored and processing record 135. The previously failed task information assists LLM 125 in learning which tasks to avoid or which order of tasks to avoid.

At block 360, processing logic instructs LLM 125 to generate a new processing plan using the new prompt, and processing logic stores the new processing plan in processing record 135. Processing logic then loops back to block 320, whereupon processing logic retrieves the first task from the new plan and proceeds through processing the tasks in the new plan.

Referring back to block 370, when processing logic determines that each of the tasks in the processing plan (original, modified, or new) have been successfully processed, processing logic branches from block 370 to block 380. At block 380, processing logic (e.g., programming executor 150 shown in Figure 1) executes the execution stack 145 accordingly.

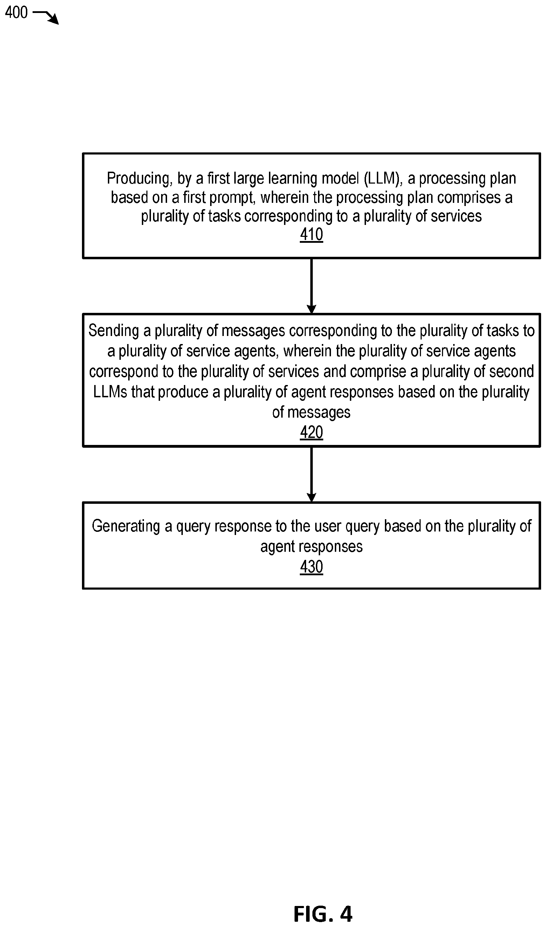

Figure 4 is a flow diagram of a method for processing a user query in a multi-service big platform system, in accordance with some embodiments of the present disclosure. Method 400 may be performed by processing logic that may include hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, at least a portion of method 400 may be performed by orchestrator agent 110, LLM 125, processing device 510, processing device 602, or a combination thereof.

With reference to Figure 4, method 400 illustrates example functions used by various embodiments. Although specific function blocks ("blocks") are disclosed in method 400, such blocks are examples. That is, embodiments are well suited to performing various other blocks or variations of the blocks recited in method 400. It is appreciated that the blocks in method 400 may be performed in an order different than presented, and that not all of the blocks in method 400 may be performed.

With reference to Figure 4, method 400 begins at block 410, wherein processing logic inputs a first prompt into a first LLM to cause the first LLM to produce a processing plan that includes a plurality of tasks corresponding to a plurality of services. In some embodiments, processing logic creates the first prompt based on a user query and a first document group, which includes information about service agents corresponding to the plurality of services.

At block 420, processing logic sends a plurality of messages corresponding to the plurality of tasks to a plurality of service agents. The plurality of service agents include a plurality of second LLMs that produce a plurality of agent responses based on the plurality of messages. In some embodiments, processing logic identifies a first task from the plurality of tasks in the processing plan, and identifies a first service agent from the plurality of service agents that correspond to the first task. The first LLM generates a first message based on a service description of the first service agent. Responsive to sending the first message to the first service agent, processing logic receives a first agent response from the first service agent. In response to determining that the first agent response completes the first task, processing logic marks the first task as complete in the processing plan, and processes a second task from the plurality of tasks in the processing plan. In some embodiments, when the first agent response does not complete the first task, processing logic constructs a second prompt based on the user query and the first agent response, and inputs the second prompt into the first LLM to produce a new processing plan that includes a plurality of new tasks. Processing logic sends a plurality of new messages to the plurality of service agents based on the plurality of new tasks.

At block 430, processing logic generates a query response to the user query based on the plurality of agent responses. In some embodiments, the plurality of agent responses include an Application Programming Interface (API) calls. Processing logic organizes the API calls into an execution stack and executes the API calls to the plurality of services in an order based on the execution stack. Processing logic then generates a query response based on responses from the services.

Figure 5 is a is a block diagram that illustrates an example system for processing a user query in a multi-service big platform system, in accordance with some embodiments of the present disclosure.

Computer system 500 includes processing device 510 and memory 515. Memory 515 stores instructions 520 that are executed by processing device 510. Instructions 520, when executed by processing device 510, cause processing device 510 to input first prompt 530 into first LLM 125. First LLM 125 produces processing plan 540 based on first prompt 530. Processing plan 540 includes tasks 550, which identify services 565.

Processing device 510 sends messages 560 to service agents 160 that correspond to services 565. Each one of service agents 160 include a second LLM 165. Service agents 160 use their corresponding second LLM 165 to produce agent responses 570, which are based on messages 560. Processing device 510 then generates query response 180 based on agent responses 570.

Figure 6 illustrates a diagrammatic representation of a machine in the example form of a computer system 600 within which a set of instructions, for causing the machine to perform any one or more of the methodologies discussed herein for intelligently scheduling containers.

In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In some embodiments, computer system 600 may be representative of a server.

The computer system 600 includes a processing device 602, a main memory 604 (e.g., read-only memory (ROM), flash memory, dynamic random access memory (DRAM), a static memory 606 (e.g., flash memory, static random access memory (SRAM), etc.), and a data storage device 618 which communicate with each other via a bus 630. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

Computer system 600 may further include a network interface device 608 which may communicate with a network 620. Computer system 600 also may include a video display unit 610 (*e.g.,* a liquid crystal display (LCD) or a cathode ray tube (CRT)), an alphanumeric input device 612 (*e.g.,* a keyboard), a cursor control device 614 (*e.g.,* a mouse) and an acoustic signal generation device 616 (*e.g.,* a speaker). In some embodiments, video display unit 610, alphanumeric input device 612, and cursor control device 614 may be combined into a single component or device (*e.g.,* an LCD touch screen).

Processing device 602 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 602 may also be one or more special-purpose processing devices such as an application specific integrated circuit (ASIC), a field programmable gate array (FPGA), a digital signal processor (DSP), network processor, or the like. The processing device 602 is configured to execute incremental solve instructions 625, for performing the operations and steps discussed herein.

The data storage device 618 may include a machine-readable storage medium 628, on which is stored one or more sets of incremental solve instructions 625 (e.g., software) embodying any one or more of the methodologies of functions described herein. The incremental solve instructions 625 may also reside, completely or at least partially, within the main memory 604 or within the processing device 602 during execution thereof by the computer system 600; the main memory 604 and the processing device 602 also constituting machine-readable storage media. The incremental solve instructions 625 may further be transmitted or received over a network 620 via the network interface device 608.

The machine-readable storage medium 628 may also be used to store instructions to perform a method for intelligently scheduling containers, as described herein. While the machine-readable storage medium 628 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable medium includes any mechanism for storing information in a form (e.g., software, processing application) readable by a machine (e.g., a computer). The machine-readable medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as "producing," "sending," "generating," "providing," "organizing," "executing," "receiving," "identifying," "marking," "processing," "constructing," "creating," "inputting," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a," "an" and "the" are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. § 112(f) for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present disclosure to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present disclosure is not to be limited to the details given herein, but may be modified within the scope and equivalents of the appended claims.

## Claims

1. A method comprising:
producing, by a first large learning model, LLM, a processing plan based on a first prompt, wherein the processing plan comprises a plurality of tasks corresponding to a plurality of services;
sending, by a processing device, a plurality of messages corresponding to the plurality of tasks to a plurality of service agents, wherein the plurality of service agents correspond to the plurality of services and comprise a plurality of second LLMs that produce a plurality of agent responses; and
generating a query response based on the plurality of agent responses.

2. The method of claim 1, wherein the plurality of agent responses comprise a plurality of Application Programming Interface, API, calls, the method further comprising:
organizing the plurality of API calls into an execution stack; and
executing the plurality of API calls to the plurality of services in an order based on the execution stack.

3. The method of claim 1 or 2, further comprising:
generating, by the plurality of second LLMs executing on the plurality of service agents, a plurality of API calls;
executing, by the plurality of service agents, the plurality of API calls to their corresponding one of the plurality of services to produce a plurality of API responses;
receiving the plurality of API responses from the plurality of service agents; and
generating the query response based on the plurality of API responses.

4. The method of any preceding claim, further comprising:
identifying a first task from the plurality of tasks in the processing plan;
identifying a first service agent from the plurality of service agents that correspond to the first task;
generating, by the first LLM, a first message based on a service description of the first service agent;
responsive to sending the first message to the first service agent, receiving a first agent response from the first service agent, wherein the first agent response is included in the plurality of agent responses;
in response to determining that the first agent response completes the first task:
marking the first task as complete in the processing plan; and
processing a second task from the plurality of tasks in the processing plan.

5. The method of claim 4, further comprising:
in response to determining that the first agent response does not complete the first task:
constructing a second prompt based on a user query and the first agent response;
producing, by the first LLM, a new processing plan based on inputting the second prompt into the first LLM, wherein the new processing plan comprises a plurality of new tasks; and
sending a plurality of new messages to the plurality of service agents based on the plurality of new tasks.

6. The method of claim 4 or 5, further comprising:
creating the first prompt based on a user query and a first document group, wherein the first document group comprises information corresponding to each of the plurality of service agents;
inputting the first prompt into the first LLM to produce the processing plan;
creating a second prompt based on the first document group and the first task; and
responsive to inputting the second prompt into the first LLM, generating, by the first LLM, the first message based on the second prompt.

7. The method of claim 6, further comprising:
creating, by the first service agent, a third prompt based on the first message and a second document group, wherein the second document group comprises more detailed information of the first service agent relative to the information included in the first document group; and
inputting, by the first service agent, the third prompt into its corresponding one of the plurality of second LLMs to produce the first agent response.

8. A system comprising:
a processing device; and
a memory to store instructions that, when executed by the processing device cause the processing device to:
produce, by a first large learning model, LLM, a processing plan based on a first prompt, wherein the processing plan comprises a plurality of tasks corresponding to a plurality of services;
send a plurality of messages corresponding to the plurality of tasks to a plurality of service agents, wherein the plurality of service agents correspond to the plurality of services and comprise a plurality of second LLMs that produce a plurality of agent responses; and
generate a query response based on the plurality of agent responses.

9. The system of claim 8, wherein the plurality of agent responses comprise a plurality of Application Programming Interface, API, calls, and wherein the processing device, responsive to executing the instructions, further causes the system to:
organize the plurality of API calls into an execution stack; and
execute the plurality of API calls to the plurality of services in an order based on the execution stack.

10. The system of claim 8 or 9, wherein the processing device, responsive to executing the instructions, further causes the system to:
generate, by the plurality of second LLMs executing on the plurality of service agents, a plurality of API calls;
execute, by the plurality of service agents, the plurality of API calls to their corresponding one of the plurality of services to produce a plurality of API responses;
receive the plurality of API responses from the plurality of service agents; and
generate the query response based on the plurality of API responses.

11. The system of any one of claims 8 to 10, wherein the processing device, responsive to executing the instructions, further causes the system to:
identify a first task from the plurality of tasks in the processing plan;
identify a first service agent from the plurality of service agents that correspond to the first task;
generate, by the first LLM, a first message based on a service description of the first service agent;
responsive to sending the first message to the first service agent, receive a first agent response from the first service agent, wherein the first agent response is included in the plurality of agent responses;
in response to determining that the first agent response completes the first task:
mark the first task as complete in the processing plan; and
process a second task from the plurality of tasks in the processing plan.

12. The system of claim 11, wherein the processing device, responsive to executing the instructions, further causes the system to:
in response to determining that the first agent response does not complete the first task:
construct a second prompt based on a user query and the first agent response;
produce, by the first LLM, a new processing plan based on inputting the second prompt into the first LLM, wherein the new processing plan comprises a plurality of new tasks; and
send a plurality of new messages to the plurality of service agents based on the plurality of new tasks.

13. The system of claim 11 or 12, wherein the processing device, responsive to executing the instructions, further causes the system to:
create the first prompt based on a user query and a first document group, wherein the first document group comprises information corresponding to each of the plurality of service agents;
input the first prompt into the first LLM to produce the processing plan;
create a second prompt based on the first document group and the first task; and
responsive to inputting the second prompt into the first LLM, generate, by the first LLM, the first message based on the second prompt.

14. The system of claim 13, wherein the processing device, responsive to executing the instructions, further causes the system to:
create, by the first service agent, a third prompt based on the first message and a second document group, wherein the second document group comprises more detailed information of the first service agent relative to the information included in the first document group; and
input, by the first service agent, the third prompt into its corresponding one of the plurality of second LLMs to produce the first agent response.

15. A computer program which, when executed by a processing device, causes the processing device to carry out the method of any one of claims 1 to 7.
